# EUROPÄISCHE PATENTSCHRIFT

(11) **EP 1 908 224 B1**
(45) Veröffentlichungstag und Bekanntmachung des Hinweises auf die Patenterteilung: **03.12.2008**
(21) Anmeldenummer: 06792489.4
(22) Anmeldetag: 11.07.2006
(51) Int. Cl.: H04L 12/46, H04L 29/06

(54) **NETZKNOTENEINHEIT UND VERFAHREN ZUR WEITERLEITUNG VON DATENPAKETEN**
NETWORK NODE UNIT AND METHOD FOR FORWARDING DATA PACKETS
UNITE DE NOEUD DE RESEAU ET PROCEDE DE TRANSMISSION DE PAQUETS DE DONNEES

(30) Priorität: 27.07.2005 DE 102005035201
(43) Veröffentlichungstag der Anmeldung: 09.04.2008
(73) Patentinhaber: Siemens Enterprise Communications GmbH & Co. KG, 81379 München (DE)
(72) Erfinder: VEITS, Oliver, 85221 Dachau (DE)
(86) Internationale Anmeldenummer: PCT/EP2006/064079
(87) Internationale Veröffentlichungsnummer: WO 2007/012559

(56) Entgegenhaltungen:
- EP-A- 1 551 131

## Beschreibung

Die Erfindung betrifft ein Verfahren und eine Netzknoteneinheit, vorzugsweise Switch, zur Weiterleitung von mit einer virtuellen Netzwerkmarkierung bzw. VLAN ID versehenen Datenpaketen.

Zur logischen Segmentierung von paketorientierten Netzwerken - in der Fachwelt oftmals auch mit LAN, Local Area Network benannt - ist eine Organisationsform eines virtuellen LAN bekannt. Ein VLAN (Virtual LAN), also ein virtuelles lokales Netzwerk innerhalb eines physikalischen Netzwerks, ist im Standard IEEE 802.1Q definiert.

Ein VLAN wird durch eine Gruppe von Netzknoteneinheiten gebildet, die in einer »Broadcast Domain« zusammengefasst sind. Eine Netzknoteneinheit ist dabei üblicherweise als Switch, Bridge usw. ausgestaltet. Im folgenden erfolgt eine Beschreibung von Netzknoteneinheiten überwiegend am Beispiel von Switches, ohne dass diese spezielle Wahl des Netzknoteneinheiten eine Einschränkung darstellt.

Soll ein virtuelles LAN über mehrere Netzknoteneinheiten ausgedehnt werden, so ist eine Erweiterung der in ausgetauschten Datenpaketen Ziel und Ursprung identifizierenden MAC-Adressen (»Media Access Control«) um eine Identifikationsnummer des virtuellen LANs vorteilhaft. Diese Identifikationsnummer wird meist als VLAN-Nummer bzw. »VLAN ID« bzw. »Virtual LAN Identification Number« bezeichnet.

Mit einem als »Frame Tagging« bezeichneten Verfahren wird eine das VLAN kennzeichnende VLAN ID als »Tag« bzw. Markierung neben dem Typ-Feld des MAC-Rahmens in einem Datenpaket eingefügt. Dieses Verfahren ist ihm erwähnten IEEE 802.1Q standardisiert und verwendet eine Wortbreite für den Tag von 12 Bit. Daraus ergeben sich theoretisch für die VLAN ID die Werte 0 bis 4095. Die VLAN-IDs »0« und »4095« sind reserviert bzw. nicht zulässig, so dass die Zahl möglicher VLAN IDs auf 4094 begrenzt ist. In 802.1Q-Netzwerken sind aus Kompatibilitätsgründen weiterhin markierungsfreie Datenpakete ohne Tag austauschbar.

Das Dokument EP 1 551 131 A (DISENO DE SIST S EN SILICIO S [ES]), das am 6. Juli 2005 veröffentlicht wurde, offenbart:
eine Netzknoteneinheit zur Weiterleitung von Datenpaketen, eingerichtet zur Weiterleitung von mit einer virtuellen Netzwerkmarkierung versehenen Datenpaketen, mit
   - Mitteln zur gefilterten Weiterleitung von mit einer kaskadierten virtuellen Netzwerkmarkierung versehenen Datenpaketen,
   - Mitteln zur Eintragung der virtuellen Netzwerkmarkierung und Adressinformationen der Datenpakete in eine Verwaltungstabelle.

Eine Ausführungsform eines virtuellen LANs ist das so genannte portbasierte VLAN. Dabei werden innerhalb eines IP-Subnetzes (»Internet Protocol«) oder auch über mehrere IP-Subnetze ein VLAN gespannt und auf mehrere Anschlüsse (»Port«) einer Netzknoteneinheit abgebildet. Die Netzknoteneinheit ist üblicherweise als Switch ausgebildet, die Abbildung auf Anschlüsse bzw. Ports dieses Switch wird folglich auch als »Switchport Mapping« bezeichnet.

Nahezu alle Switches unterstützten eine Erkennung und Untersuchung der VLAN-Markierung in einem MAC-Rahmen. Dies Erkennung und Untersuchung erfolgt vor jeder Weiterbearbeitung und Weiterleitung des Datenpakets. Ein auf einem Anschluss einer Netzknoteneinheit - Switchport - eintreffendes, noch nicht markiertes Paket wird dabei markiert, d.h. mit einem VLAN Tag versehen. Sobald ein Datenpaket von einem Switch an ein für vorgesehenes Kommunikationsziel, z.B. einen an einer paketorientierten Kommunikation beteiligten Rechner, zu übermitteln ist, wird diese Markierung üblicherweise vom übermittelnden Switch aus dem MAC-Rahmen entfernt. Diese Maßnahme gewährleistet unter anderem eine Verwendung von Netzwerkkarten in Rechnern, welche einen Aufbau des MAC-Rahmens gemäß 802.1Q nicht unterstützen.

In vielen Fällen sieht eine Bearbeitungssoftware einer Netzknoteneinheit oder eines Switch eine Markierung von Datenpakete auch für die Fälle vor, in denen das zu bearbeitende Datenpakete bereits eine Markierung mit einer VLAN ID enthält. Dabei wird einem 802.1Q-Header mit vorhandener VLAN-Mar-kierung bzw. VLAN ID ein neuer 802.1Q Header mit einer neuen - im Allgemeinen unterschiedlichen - VLAN ID vorangestellt. Der ursprüngliche 802.1Q-Header bleibt dabei unverändert, wenn auch um die Länge des neuen 802.1Q Header nach hinten geschoben.

Ein solche Voranstellung wird auch bei heute bekannten Verfahren zur Anbindung an paketorientierte Netzwerke auf Basis von 802.1Q-Tunneling-Verfahren eingesetzt, welche eine transparente Anbindung an Ethernet-Dienst gewährleisten sollen.

Im Stand der Technik sind proprietäre Erweiterung des Protokolls IEEE 802.1Q bekannt, mit denen eine Erweiterung der begrenzte Anzahl von 4094 möglicher VLAN IDs möglich ist. Dabei werden Verfahren angewandt, welche als Kaskadieren von VLAN IDs bekannt sind. Unter dieser Kaskadierung versteht man eine hierarchische Markierung, bei der vor dem ursprünglichen ersten 802.1Q-Header einen zusätzliche 802.1Q-Header anfügt. Dies ist äquivalent zu der Betrachtungsweise, dass die ursprüngliche erste VLAN ID zunächst in einen Datenteil des Datenpakets abgelegt wird, bevor das Markierungsfeld (Tag) mit der zweiten VLAN ID überschrieben wird. Die zuvor beschriebene Markierung, also der ursprünglich erste 802.1Q-Header, wird im folgenden Basismarkierung genannt. Das Verfahren ist analog mit einer dritten, vierten ... VLAN ID fortzusetzen, wodurch eine entsprechend tiefer gestaffelte VLAN ID-Kaskade entsteht. Ein solches Verfahren wird beispielsweise von Service Providern verwendet, um eine Nutzung ein und derselben Infrastruktur für mehrere Kunden zu erlauben, wobei sich die von Kunden ausgetauschten Datenpakete möglichst nicht gegenseitig beeinflussen sollen.

Eine Kaskadierung löst nicht das Problem, dass für eine Weiterleitungsentscheidung eines Netzelements - neben anderen Kriterien - zwar die VLAN ID in der Basismarkierung herangezogen wird, nicht jedoch die tiefer kaskadierten VLAN IDs. Beim heutigen Stand der Technik tritt bei einer Weiterleitung mit einer mehrfach identischen Adressierungsinformation in den Datenpaketen von unterschiedlichen Sendern eine nicht korrekte Weiterleitung von nachfolgenden Datenpaketen ein, die an diese im Netzwerk doppelt vorhandene Adresse gerichtet sind. Eine mehrfach identische Adressierungsinformation kann z.B. durch einen Angreifer verursacht werden, der eine falsche Adresse benutzt.

Aufgabe der Erfindung ist es, Mittel bereitzustellen, durch die ein Adressraum durch eine Kaskadierung von mit einer virtuellen Netzwerkmarkierung versehenen Datenpaketen vergrößert wird, ohne dass eine Adressinformationen der Datenpakete zu einer falschen Weiterleitung der Datenpakete führt.

Eine Lösung der Aufgabe erfolgt hinsichtlich ihres Vorrichtungsaspekts durch eine Netzknoteneinheit mit den Merkmalen des Patentanspruchs 1 und hinsichtlich ihres Verfahrensaspekts durch ein Verfahren mit den Merkmalen des Patentanspruchs 3.

Erfindungsgemäß ist eine Netzknoteneinheit vorgesehen, welche fähig ist, kaskadierte Markierungen (Tags) in Datenpaketen zu erkennen und zu filtern. Ein filtern und ein »lernen«, d.h. Eintragung der virtuellen Netzwerkmarkierung und Adressinformationen der Datenpakete in eine Verwaltungstabelle, erfolgt in Abhängigkeit von der »vorgebbaren« Kaskadierungstiefe des Switches und der in den Datenpaketen erkannten Kaskadierungstiefe. Eine Eintragung der virtuellen Netzwerkmarkierung und Adressinformationen, insbesondere MAC-Adresse, der Datenpakete in eine Verwaltungstabelle erfolgt z.B. nur, wenn die Kaskadierungstiefe in den Datenpaketen nicht über die Bearbeitungsfähigkeit, d.h. die »vorgebbare Kaskadierungstiefe« der Netzknoteneinheit hinausgeht.

Die Maßgabe, eine Filterung (bzw. gefilterte Weiterleitung) von Datenpaketen und Eintragung in die Verwaltungstabelle vorzunehmen, erfolgt in Abhängigkeit von der Kaskadierungstiefe und den Fähigkeiten des Switches, bis zu einer bestimmten Kaskadierungsstufe zu arbeiten. Damit wird einerseits der Adressraum durch eine Kaskadierung der virtuellen Netzwerkmarkierung vergrößert, andererseits führen auch mehrfach identischen Adressierungsinformation in den Datenpaketen von unterschiedlichen Sendern nicht zu einer falschen Weiterleitung an den gewünschten Adressaten erfolgt, wie in den folgenden Ausführungsbeispiel näher beschrieben.

Mit den erfindungsgemäßen Mitteln wird also sichergestellt, dass Datenpakete - auch bei Vorhandensein von Netwerkknotenelementen unterschiedlicher Fähigkeiten bezüglich der Berücksichtigung kaskadierter VLAN IDs - korrekt ausgeliefert werden.

Ausführungsbeispiele mit Erläuterung von Vorteilen der Erfindung sowie beispielhaften Ausgestaltungen werden im folgenden anhand der Zeichnung näher erläutert.

Dabei zeigen:
- Fig. 1:: ein Strukturbild zur schematischen Darstellung einer Anordnung von Netzknoteneinheiten in einem Netzwerk,
- Fig. 2:: ein Strukturbild zur schematischen Darstellung einer Anordnung von Netzknoteneinheiten in einem größeren Ausschnitt des Netzwerks.

Es erfolgt - zunächst ohne Bezugnahme auf die Zeichnung - eine Darstellung der Eigenschaften der im Ausführungsbeispiel verwendeten Netzknoteneinheiten, die beispielsweise als Switches ausgestaltet sind.

Ein wesentliches Merkmal eines Switches ist es, empfangene Datenpakete nur an die Anschlüsse bzw. »Ports« zu übergeben, welche aufgrund einer in den Datenpaketen eingetragenen Zielinformation für diese Übergabe vorgesehen sind. Die im Datenpaket eingetragene Zielinformation setzt sich zusammen aus der MAC-Adresse (Media Acces Control) des Zielsystems und der VLAN ID in der Basismarkierung. Datenpakete an einer nicht eingetragenen MAC-Adresse werden an alle Anschlüsse der selben VLAN ID weitergeleitet.

Hierzu ist in einem Switch üblicherweise eine Verwaltungstabelle zur Speicherung der Zielinformation und des zugehörigen Ports, über die das Zielsystem erreichbar ist, vorgesehen.

Ein Switch überprüft an einem Port empfangene Datenpakete auf eine im Datenpaket enthaltene Quelleninformation - insbesondere MAC-Adresse des Sendersystems bzw. Quell-MAC-Adresse und die VLAN ID des empfangene Datenpakets. Ist die Quelleninformation noch nicht in der Verwaltungstabelle eingetragen, erfolgt ein Eintrag, der die Quell-MAC-Adresse mit dem Port und der VLAN ID assoziiert, auf dem das Datenpaket empfangen wurde. Gleichzeitig wird ein Zeitstempel mit der Ankunftszeit eingetragen. Ist die Quelleninformation eines Datenpakets schon eingetragen, wird der schon bestehende Eintrag beibehalten und dessen Zeitstempel aktualisiert. Ein neuer bzw. geänderter Eintrag in der Verwaltungstabelle wird im folgenden auch als »lernen« bezeichnet. Das Datenpaket wird dann gemäß der Zielinformationen auf die dort eingetragenen Ports weitergereicht. Dieser Vorgang wird als »filtern« bezeichnet.

Je nach Ausgestaltung des Switch bzw. der Netzknoteneinheit existieren unterschiedliche Verwaltungstabellen für die Quellen- bzw. Zielinformationen. Der Begriff »Tabelle« ist dabei nicht einschränkend auf eine bestimmte Form der Datenorganisation zu verstehen.

Sobald die Einträge in der Verwaltungstabelle eine vorgegebene Grenze überschreiten, kann der Switch keine neuen Einträge mehr speichern und leitet Datenpakete mit unbekannter Zielinformation auf alle Ports der selben VLAN ID weiter. Diese Datenpakete werden innerhalb des gesamten virtuellen LANs »geflutet« (»Unicast Flooding«).

Ein Weiterleitung von Datenpaketen mit unbekannter Zielinformation auf alle Ports tritt auch für den Fall ein, bei dem eine Zielinformation eines eintreffenden Datenpakets noch nicht in der Verwaltungstabelle eingetragen ist, aus diesem Grund also - noch - unbekannt ist. In diesem Fall wird das Datenpaket ebenfalls innerhalb des virtuellen LANs an alle Ports des Switch, außer demjenigen, über den es empfangen wurde, weitergeleitet.

Im Switch ist üblicherweise ein periodisch ablaufender Prozess vorgesehen, welcher auch als »Aging Timer« bezeichnet wird. Dieser Prozess überprüft die Verwaltungstabelle und bereinigt Einträge, welche älter als eine einstellbare Zeitspanne sind. Mit diesem Prozess wird vermieden, dass veraltete Einträge zu einer Kapazitätsüberschreitung der Verwaltungstabelle führen. Eine solche Bereinigung der Verwaltungstabelle hat außerdem Vorteile für die Erreichbarkeit mobiler Endgeräte.

Alle Switches besitzen darüber hinaus die im folgenden genannten erfindungsgemäßen Eigenschaften:
1. Die Switches sind fähig, Datenpakete gemäß der kaskadierte Markierungen (Tags) in Datenpaketen zu lernen und zu filtern. Die Kaskadierungstiefe eines Datenpakets wird dabei mit N angegeben. Sie entspricht der Anzahl an kaskadierten Tags. Allgemein gilt: N ≥ 0. Für den Fall N = 0 liegt also ein unmarkiertes Datenpaket vor, für den Fall N = 1 ein mit einer VLAN ID markiertes Datenpaket ohne Kaskadierung, für N > 1 liegt ein kaskadiertes markiertes Datenpaket vor. Die Fähigkeit eines Switch, ein Datenpaket mit der Kaskadierungstiefe N zu bearbeiten wird ebenfalls Kaskadierungstiefe genannt. Da sie der Charakterisierung der implementierbaren Fähigkeiten des Switch dient, wird sie vorgebbare Kaskadierungstiefe N genannt. Bei heute üblichen Switches ist N = 1. Die Kaskadierungstiefe N eines Switches dient einer Charakterisierung, bis zu welcher Kaskadierungstiefe Datenpakete bearbeitbar sind.
2. Die Switches sind fähig, zu erkennen, ob sich hinter dem VLAN Tag mit der Kaskadierungstiefe N ein weiterer Tag befindet, ohne dessen Inhalt auszuwerten. Dies bedeutet für einen beispielsweise mit N = 2 charakterisierten Switch - welcher also bis zu zwei kaskadierte Markierungen in Datenpaketen bearbeiten kann - dass er auch Datenpakete mit einer Kaskadierungstiefe von drei, vier usw. erkennt und nach dem folgenden Punkt 3. mit diesen verfährt.
3. Die Switches lernen und filtern nur Datenpakete, deren Kaskadierungstiefe ≤ N ist. Gemäß des obigen Beispiels mit einem Switch mit einer Kaskadierungstiefe von N = 2 würden also Datenpakete mit einer Kaskadierungstiefe von drei, vier usw. weder gefiltert noch gelernt werden. Bei einem Lernen wird die MAC-Adresse, der Port und die gesamte VLAN ID Kaskade in die Verwaltungstabelle eingetragen.

Datenpakete, welche von einem Switch nicht gefiltert oder gelernt werden, werden üblicherweise an alle Anschlüsse (Ports) des Switch weitergeleitet, deren VLAN ID mit der VLAN ID im Markierungsfeld (Tag) des Datenpakets übereinstimmt. Dies bleibt auch im Fall kaskadierter Markierungen gültig, da die Markierungen mit N > 1 nicht im dafür vorgesehenen Teil des Datenpakets abgelegt werden, sondern beispielsweise in einem Nutzdatenfeld des Datenpakets gespeichert werden. Es kann aber vorteilhaft sein, die Weiterleitung der Datenpakete auf alle Anschlüsse (Ports) zu beschränken, deren erlaubte VLAN ID bis in die Tiefe N mit jenem des Datenpaketes übereinstimmen. Wenn beispielsweise ein Datenpaket eine kaskadierte VLAN ID 5/6/8 aufweist und an einem Switch mit der Fähigkeit N = 2 verarbeitet wird, dann wird das Datenpaket an alle Ports weitergeleitet, die für die VLAN-Kaskade 5/6 erlaubt sind.

In einer ersten Ausführungsform wird zunächst davon ausgegangen, dass der Rechner PCA ummarkierte Datenpakete - d.h. »untagged« - Datenpakete versendet. Dieses Ausführungsbeispiel trifft also auf die meisten Arbeitsplatzrechner zu, an deren Netzwerkkarte oder deren Kommunikationsprotokollen keinen speziellen Einstellungen vorgenommen sind.

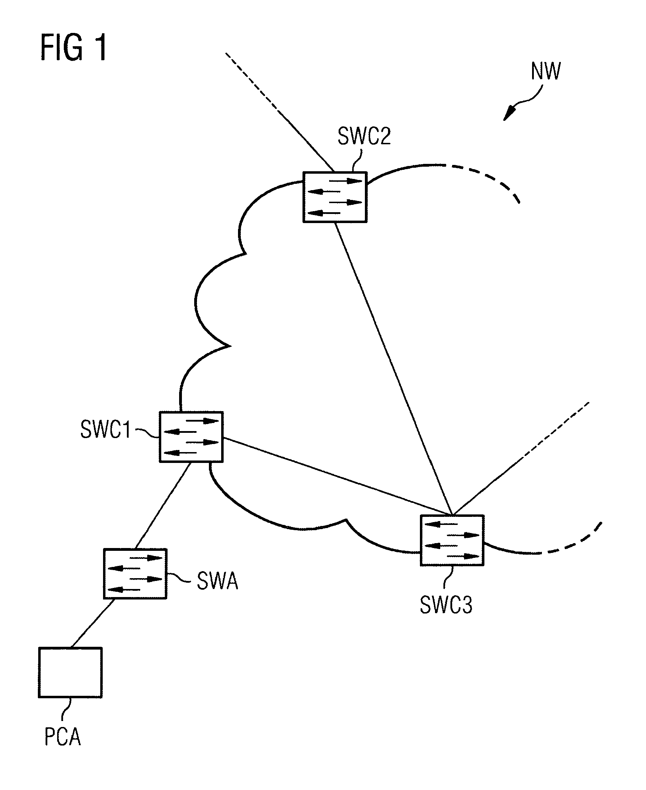

FIG 1 zeigt einen Ausschnitt eines paketorientierten Netzwerks NW, gebildet aus einer Mehrzahl von Switches SWA;SWC1,SWC2,SWC3. Die letztgenannten Switches SWC1,SWC2,SWC3 werden im folgenden auch Core-Switches genannt und bilden ein Netzwerk CORE, welches über den so genannten Provider-Switch SWA transparent an einen Rechner PCA angebunden ist. Der Provider-Switch SWA wird von einem Datendienstanbieter bzw. Provider unterhalten. Die Ausführung des Rechners PCA ist weitgehend beliebig, beispielsweise kann der Rechner PCA als Arbeitsplatzrechner oder auch als Netzknoteneinheit wie beispielsweise Router, Switch usw. ausgeführt sein.

Der Provider-Switch SWA sei durch eine Kaskadierungstiefe von N = 1 charakterisiert. Vom Rechner PCA werde nun ein Datenpaket an den Provider-Switch SWA gesendet. Der Provider-Switch SWA fügt zuerst eine Markierung mit einer für den empfangenden Port vorgesehenen VLAN ID in das unmarkiert empfangene Datenpaket ein.

Der Switch SWA erkennt nun, dass das bearbeitete Datenpaket genau eine Markierung (Tag) besitzt und damit seine Kaskadierungstiefe von N = 1 nicht überschritten werden. Daher erfolgt im Anschluss ein Lernvorgang. Bei diesem Lernvorgang wird im Switch SWA eine Quell-MAC-Adresse aus dem MAC-Frame des Datenpakets entnommen. Die Quell-MAC-Adresse wird dann in eine der für eine jeweilige VLAN ID vorgehaltenen Verwaltungstabellen eingetragen, im vorliegenden Fall also in die Verwaltungstabelle, welche für die VLAN ID vorgehalten wird, mit der das Datenpaket zuvor vom Provider-Switch SWA markiert wurde. Gleichzeitig wird ein Zeitstempel (Aging-Timer)für den Eintrag gesetzt. Falls für die betrachtete Quell-MAC-Adresse bereits ein Eintrag in der Verwaltungstabelle enthalten ist, unterbleibt ein Eintrag.

Dem Datenpaket wird weiterhin eine Ziel-MAC-Adresse entnommen. Diese Ziel-MAC-Adresse wird mit Ziel-MAC-Adressen der Verwaltungstabelle für diese VLAN ID verglichen und bei Auffinden einer identischen Ziel-MAC-Adresse eine Übermittlung des Datenpakets an den in der Tabelle spezifizierten Ort veranlasst.

Falls kein Eintrag einer Ziel-MAC-Adresse in der MAC-Tabelle vorhanden ist, welcher mit der im Datenpaket angegebenen Ziel-MAC-Adresse korrespondiert, wird das Datenpaket an alle Anschlüsse bzw. Ports des hier betrachteten Switch SWA gesendet (Flooding), welche für die aktuelle VLAN ID eingerichtet sind, z.B. also den Port in Richtung Core-Switches SWC.

Der Core-Switch SWC fügt dem vom Provider-Switch SWA empfangenen Datenpaket, nach dem Prinzip des Kaskadierungsverfahrens eine weitere Markierung hinzu. Im folgenden wird davon ausgegangen, dass der Core-Switch SWC fähig ist, lediglich auf einer VLAN-Ebene zu filtern, d.h. auch für diesen Switch des SWC gilt N = 1.

Gemäß Punkt 2 der Annahmen für alle hier betrachteten Switches ist er aber in der Lage zu erkennen, dass das Datenpaket mehr als N, im vorliegenden Fall zwei, Markierungen enthält. Daher wird dieser Core-Switch SWC weder die Quell-MAC-Adresse des empfangenen Datenpakets lernen, noch wird er Datenpakete filtern, d.h. er wird die Datenpakete nicht an bestimmte Anschlüsse (Ports) weiterleiten, sondern ein Flooding durchführen, d.h. das empfangene Datenpaket auf alle Ports weiterleiten.

Gilt die vorgenannte Eigenschaft einer Kaskadierungstiefe von N = 1 für alle Core-Switches SWC1,SWC2,SWC3, werden alle an diesen Switches empfangene Datenpakete in das gesamte Core-Netzwerk CORE geflutet, beschränken sich dabei aber auf Ports, auf denen VLANC erlaubt ist. Es bleibt dann die Aufgabe eines Access-Switches SWA, eine MAC-Adresse-Filterung durchzuführen um den Kunden nicht mit gefluteten Datenpaketen bzw. Unicast-Frames zu belasten.

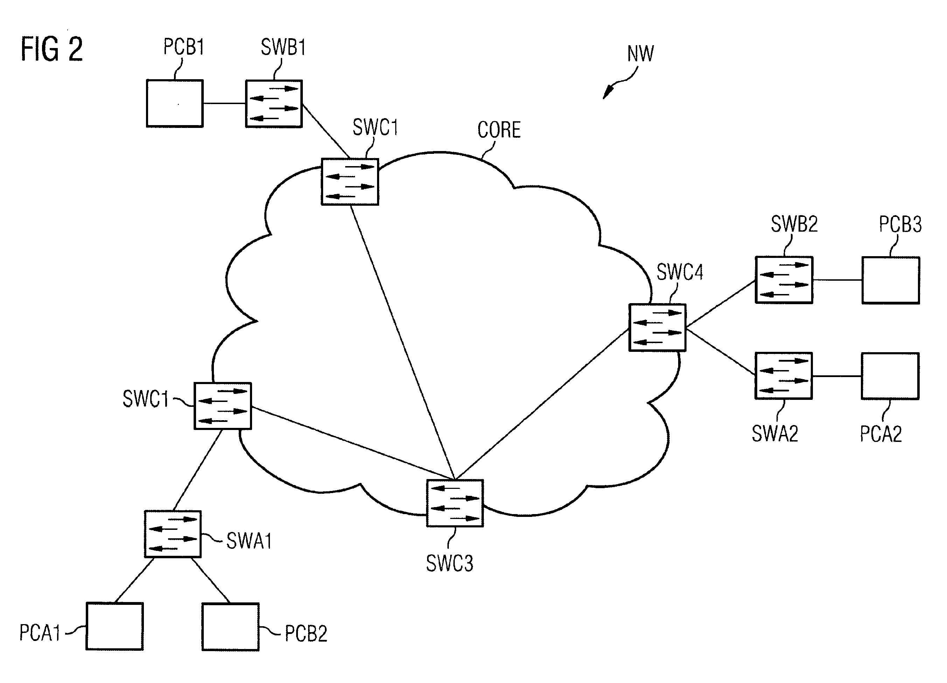

FIG 2 zeigt das aus FIG 1 bekannte Netzwerk NW in einem größeren Ausschnitt. Dabei repräsentieren Funktionseinheiten mit identischen Funktionszeichen die vormals aus FIG 1 bekannten Funktionseinheiten, mit Ausnahme des aus FIG 1 bekannten Rechners PCA und des Switches SWA, welche nun mit den Kurzzeichen PCA1 bzw. SWA1 bezeichnet sind.

Weiterhin ist ein Provider-Switch SWB1 an den Core-Switch SWC2 angeschlossen. An den Provider-Switch SWB1 ist ein Rechner PCB1 angeschlossen. Innerhalb des Core-Netzwerks CORE ist ein vierter Core-Switch SWC4 angeordnet, welcher mit den Provider-Switches SWA2, SWB2 verbunden ist. Ein weiterer Rechner PCB3 ist mit dem Provider-Switch SWB2, und schließlich ein Rechner PCA2 mit dem Provider-Switch SWA2 verbunden.

»MAC-Adress-Spoofing« genannte Verfahren haben Auswirkungen auf einen ungestörten Datenaustausch im Netzwerk NW. Unter diesen Verfahren versteht man eine - meist in böswilliger Absicht erfolgende - Verwendung einer nicht zugewiesenen bzw. registrierten MAC-Quellenadresse in übermittelten Datenpaketen.

Eine nicht-böswillige Variante von Spoofing tritt beispielsweise bei einem Anschluss eines Routers mit einer Unterstützung des 802.1Q-Protokolls bei einer 802.1Q-Trunkanbindung auf. Ein Router verwendet nämlich die selbe MAC-Adresse in mehreren VLAN-Segmenten.

Eine weitere nicht-böswillige Variante von Spoofing tritt bei der Verwendung von Testeinheiten zur Überprüfung des Datenaustauschs, so genannten Traffic-Generatoren, auf. Traffic-Generatoren bieten als Standardfunktion eine simulierte Sendung - auch MAC-Adress Sweeping genannt - von Testnachrichten mit unterschiedlichen MAC-Adressen bieten.

Schließlich ergibt sich eine nicht-böswillige Form von Spoofing auch in den Fällen, in denen ein einzelner Kunde eines Providers redundant an ein für verschiedene Kunden unterschiedliche Topologien - z.B. unter Verwendung eines »Spanning Tree Protocol«, STP - angebunden ist. Zur Vermeidung einer Doppelbelegung ist oft vorgesehen, dass die gleiche Netzwerkadresse nicht in verschiedenen VLANs verwendet werden darf. Dies trifft aber im Fall des oben genannten Routers auf Probleme, da ein Router, wie erläutert, die selbe MAC-Adresse in mehreren VLAN-Segmenten verwendet.

Im folgenden wird von zwei - nicht dargestellten - Kunden A und B ausgegangen, welche über die Switches SWA1, SWA2, SWB1, SWB2 an en Providernetz angeschlossen sind.

Zur Erläuterung einer Verhinderung des MAC-Adress-Spoofing mit Hilfe des erfindungsgemäßen Verfahrens wird davon ausgegangen, dass auf dem Rechner PCB1 des Kunden B eine Software zur Ausführung gebracht wird, durch die in Hinblick auf die Kommunikation des Rechners PCB1 eine beliebige Quell-MAC-Adresse einstellbar ist. Bezüglich der von diesem Rechner PCB1 gesendeten Datenpakete stimmt also beispielsweise die Quell-MAC-Adresse nicht mit der eingestellten MAC-Adresse der - nicht dargestellten - Netzwerkkarte des Rechner PCB1 überein.

Es wird weiterhin davon ausgegangen, dass die so vorgegebene Quell-MAC-Adresse des Rechners PCB1 so eingestellt ist, dass sie mit der wahren Quell-MAC-Adresse des Rechners PCA1 identisch ist. Es wird ferner davon ausgegangen, dass der Rechner PCB1 in jüngerer Vergangenheit eine Serie von Datenpaketen in das Core-Netzwerk CORE gesendet hat. Ohne Anwendung des erfindungsgemäßen Verfahrens wären nun die Core-Switches SWC1,SWC2,SWC3,SWC4 so eingestellt, dass diese grundsätzlich anhand der aus dem jeweiligen Datenpaket entnommenen MAC-Adressen filtern würden.

Auf diese Weise könnte ein vom Rechner PCA2 gesendetes Datenpaket den Rechner PCA1 nicht erreichen, da sämtliche Datenpakete, die von PCA2 geschickt werden über den dritten Core-Switch SWC3 fälschlicherweise nur an den zweiten Core-Switch SWC2 gesendet werden. Die Datenpakete würden auf diese Weise niemals den eigentlich gewünschten ersten Core-Switch SWC1 und über diesen den ersten Rechner PCA1 erreichen.

Mit Hilfe des erfindungsgemäßen Verfahrens ist es möglich, in 802.1Q-Tunneling-Netzwerken mehrere VLAN Tags zu kaskadieren (und damit mehr als 4094 Kunden anzuschließen), ohne dass im Netzwerk Probleme mit MAC-Adress-Spoofing auftreten. Es liegt dabei im Belieben des Fachmanns, die erfindungsgemäße Lehre so umzusetzen, im Core-Netzwerk CORE entweder Switches zu nutzen, die fähig sind, alle VLAN-Tags zu beachten und demgemäß nach MAC-Adressen zu filtern, oder aber kostengünstigere Switches einzusetzen, welche zwar nur eine geringe Kaskadierungstiefe der Markierung berücksichtigen, dafür aber auf eine Filterung im Core-Netzwerk CORE verzichten.

Falls ein Kunde keine unmarkierten Datenpakete sondern markierte Datenpakete an den Switch SWA1 sendet, ist das erfindungsgemäße Vorgehen in gleicher Weise einsetzbar.

In einer ersten Ausführungsform werden für diesen Fall Access-Switches SWA1 eingesetzt, welche mindestens zwei Markierungen erkennen können, also eine vorgebbare Kaskadierungstiefe von N ≥ 2 besitzen. Eine Markierung des Kunden sei dabei mit VLAN_a, die Markierung des Providers durch den Provider-Switch SWA1 mit VLAN_A bezeichnet. Die Quell-MAC-Adresse eines Datenpakets im kundeneigenen virtuellen Netzwerk VLAN_a, dem die Markierung des Providers VLAN_A durch Kaskadierung hinzugefügt wird, ist dann in der Verwaltungstabelle mit dem Index (VLAN_A, VLAN_a) einzutragen. Durch diesen Index ist die Eindeutigkeit zwischen dem Kunden-VLAN und dem Provider-VLAN wieder hergestellt. Lediglich Datenpakete mit einem identischen Wert von VLAN_A und VLAN_a können sich beeinflussen.

Gemäß einer zweiten Ausführungsform wird das erfindungsgemäße Verfahren mit der Maßgabe beibehalten, dass der zur Filterung von N Kaskadierungsebenen fähige Switch SWA1 nur dann nicht filtert, wenn die in den Datenpaketen erkannte Kaskadierungsebene einen Wert von N+1 übersteigt. Bei dieser Konfiguration könnte jedoch bei redundanter Anbindung über ein VLAN STP-Verfahren (Spanning Tree Protocol) und Verwendung gleicher MAC-Adressen in verschiedenen VLANs das im Zusammenhang mit MAC-Address-Spoofing genannte Problem eintreten, nämlich dass sich die gleichen MAC-Adressen in unterschiedlichen VLANs gegenseitig stören. Aus diesem Grund ist dem ersten Ausführungsbeispiel bei praktischen Implementierungen der Vorzug zu geben.

Das erfindungsgemäße Verfahren bzw. ein erfindungsgemäß ausgestalteter Switch findet eine vorteilhafte Anwendung bei Anbindung von Kunden eines Service Providers über transparente Ethernet-Services. »Transparent« bedeutet eine direkte Tunnelung der bezogenen bzw. gesendeten Daten mit der Möglichkeit, an den zur Verfügung gestellten Datenport auch weitere Switches anschließen zu können. In diesem Fall werden markierte Datenpakete an den Provider-Switch SWA1 gesendet, vgl. oben. Mit den vorgeschlagenen erfindungsgemäßen Mitteln wird eine durch die vorgegebene Länge der Markierung bedingte Beschränkung auf 4.094 Anschlüsse aufgehoben.

## Patentansprüche

1. Netzknoteneinheit zur Weiterleitung von Datenpaketen, eingerichtet zur Weiterleitung von mit einer virtuellen Netzwerkmarkierung versehenen Datenpaketen, mit
- Mitteln zur Erkennung einer eine vorgebbare Kaskadierungstiefe übersteigende erkannten Kaskadierungstiefe der virtuellen Netzwerkmarkierung in den Datenpaketen
- Mitteln zur gefilterten Weiterleitung von mit einer kaskadierten virtuellen Netzwerkmarkierung versehenen Datenpaketen in Abhängigkeit von der vorgebbaren und der erkannten Kaskadierungstiefe
- Mitteln zur Eintragung der virtuellen Netzwerkmarkierung und Adressinformationen der Datenpakete in eine Verwaltungstabelle in Abhängigkeit von der vorgebbaren und der erkannten Kaskadierungstiefe.

2. Netzknoteneinheit nach Anspruch 1,
**gekennzeichnet durch,**
eine Ausgestaltung als Switch.

3. Verfahren zur Weiterleitung von Datenpaketen welche mit einer virtuellen Netzwerkmarkierung versehen sind, mit folgenden Verfahrensschritten
- Erkennung einer eine vorgebbare Kaskadierungstiefe übersteigende erkannten Kaskadierungstiefe der virtuellen Netzwerkmarkierung in den Datenpaketen
- Gefilterte Weiterleitung von mit einer kaskadierten virtuellen Netzwerkmarkierung versehenen Datenpaketen in Abhängigkeit von der vorgebbaren und der erkannten Kaskadierungstiefe
- Eintragung der virtuellen Netzwerkmarkierung und Adressinformationen der Datenpakete in eine Verwaltungstabelle in Abhängigkeit von der vorgebbaren und der erkannten Kaskadierungstiefe.

4. Computerprogrammprodukt mit Mitteln zur Durchführung des Verfahrens nach Anspruch 3, wenn das Computerprogrammprodukt an einem Netzknoteneinheit zur Ausführung gebracht wird.

## Claims

1. Network node unit for forwarding data packets, designed for forwarding data packets provided with a virtual network tag, comprising
- means for recognising an identified cascading depth of the virtual network tag in the data packets which exceeds a predefinable cascading depth
- means for the filtered forwarding of data packets provided with a cascaded virtual network tag as a function of the predefinable and the identified cascading depth
- means for entering the virtual network tag and address information of the data packets in an administration table as a function of the predefinable and the identified cascading depth.

2. Network node unit according to claim 1, **characterised by** an embodiment as a switch.

3. Method for forwarding data packets which are provided with a virtual network tag, comprising the following method steps:
- recognition of an identified cascading depth of the virtual network tag in the data packets which exceeds a predefinable cascading depth
- filtered forwarding of data packets provided with a cascaded virtual network tag as a function of the predefinable and the identified cascading depth
- entering of the virtual network tag and address information of the data packets in an administration table as a function of the predefinable and the identified cascading depth.

4. Computer program product comprising means for carrying out the method according to claim 3 if the computer program product is executed at a network node unit.

## Revendications

1. Unité de noeud de réseau destinée à la transmission de paquets de données, configurée pour la transmission de paquets de données munis d'un marquage de réseau virtuel, comprenant
- des moyens pour reconnaître une profondeur de cascade identifiée, dépassant une profondeur de cascade prédéfinissable, du marquage de réseau virtuel dans les paquets de données
- des moyens pour la transmission filtrée de paquets de données munis d'un marquage de réseau virtuel cascadé en fonction de la profondeur de cascade prédéfinissable et de la profondeur de cascade identifiée
- des moyens pour inscrire le marquage de réseau virtuel et des informations d'adresse des paquets de données dans un tableau d'administration en fonction de la profondeur de cascade prédéfinissable et de la profondeur de cascade identifiée.

2. Unité de noeud de réseau selon la revendication 1,
**caractérisée par**
une conception en tant que switch.

3. Procédé de transmission de paquets de données, lesquels sont munis d'un marquage de réseau virtuel, comprenant les étapes de procédé suivantes
- reconnaissance d'une profondeur de cascade identifiée, dépassant une profondeur de cascade prédéfinissable, du marquage de réseau virtuel dans les paquets de données
- transmission filtrée de paquets de données munis d'un marquage de réseau virtuel cascadé en fonction de la profondeur de cascade prédéfinissable et de la profondeur de cascade identifiée
- inscription du marquage de réseau virtuel et des informations d'adresse des paquets de données dans un tableau d'administration en fonction de la profondeur de cascade prédéfinissable et de la profondeur de cascade identifiée.

4. Produit de programme d'ordinateur comprenant des moyens pour la réalisation du procédé selon la revendication 3, lorsque le produit de programme d'ordinateur est exécuté sur une unité de noeud de réseau.
